# EUROPÄISCHE PATENTSCHRIFT

(11) **EP 3 600 852 B1**
(45) Veröffentlichungstag und Bekanntmachung des Hinweises auf die Patenterteilung: **03.02.2021**
(21) Anmeldenummer: 18721951.4
(22) Anmeldetag: 29.03.2018
(51) Int. Cl.: B29C 65/04, B29C 65/14, B29C 65/16, B29C 65/48, F16L 31/00, F16L 47/02, B29L 23/00, B29L 23/24

(54) **VERFAHREN ZUM VERSCHWEISSEN**
WELDING METHOD
PROCÉDÉ DE SOUDAGE

(30) Priorität: 30.03.2017 DE 102017106906
(43) Veröffentlichungstag der Anmeldung: 05.02.2020
(73) Patentinhaber: TPU Plus GmbH, 52078 Aachen (DE)
(72) Erfinder: MATTFELD, Patrick, 52074 Aachen (DE)
(74) Vertreter: Bauer, Dirk
(86) Internationale Anmeldenummer: PCT/EP2018/000138
(87) Internationale Veröffentlichungsnummer: WO 2018/177599

(56) Entgegenhaltungen:
- WO-A1-97/06954
- FR-A1- 2 207 812
- US-A- 2 623 571
- US-B1- 6 540 859
- US-B1- 6 632 306

## Beschreibung

Die Erfindung betrifft ein Verfahren zum Verschweißen eines ersten Schlauchendes an einer Nahtstelle mit einem zweiten Schlauchende in einer Naht, die auf einem Umfang des ersten Schlauchendes umläuft, wobei zunächst an der Nahtstelle in dem ersten Schlauchende eine Schutzschicht appliziert, dann das zweite Schlauchende über die Nahtstelle hinaus über das erste Schlauchende geschoben wird und schließlich die Schlauchenden an der Nahtstelle zwischen zwei aufeinander zu geführten Spannbacken flach zusammengepresst und in dieser Stellung verschweißt werden, wobei die Schutzschicht auf einer Innenseite des ersten Schlauchendes appliziert wird und ein Verschweißen der Innenseite des ersten Schlauchendes verhindert.

US 6,540,859 B1 offenbart ein solches Verfahren zum Spleißen eines Bewässerungsschlauchs. Beim flachen Zusammenpressen des Schlauchs bilden sich an beiden Enden des Querschnitts sog. "Katzenaugen": Der Schlauch wird in einem kleinen Umfangsstück um 180 ° umgelenkt, wobei die Außenseite gedehnt und die Innenseite gestaucht wird. Beim Öffnen des Schlauchs wird die Innenseite entsprechend gedehnt. Eine an dieser Stelle angebrachte Schweißnaht wird dadurch geschwächt.

US 6,090,233 A und WO 97/06954 A1 schlagen im Hintergrund der Erfindung vor, zum Verschweißen zweier Schlauchenden eines Bewässerungsschlauchs als Schutzschicht einen flachen Hitzeschild aus Stärke, Wachspapier, Fiberglas, Baumwolle, Wolle, Asbest oder Teflon® in das innere Schlauchende einzulegen. Die Verschweißung der Schlauchenden mit dem bekannten Verfahren weist eine für die Herstellung eines Luftschlauchs für ein Fahrzeugrad unzureichende Dichtigkeit auf.

Im weiteren Hintergrund der Erfindung offenbart US 2,623,571 A ein Verfahren zum Herstellen eines Luftschlauchs für ein Fahrzeugrad, wobei die beiden Enden kegel- bzw. dazu passend trichterförmig abgeschrägt und verschweißt werden.

### Aufgabe

Der Erfindung liegt die Aufgabe zugrunde, die Dichtigkeit der Schweißnaht zu verbessern.

### Lösung

Ausgehend von dem bekannten Verfahren wird nach der Erfindung vorgeschlagen, dass die Schlauchenden nach dem Verschweißen in zwei ersten Teilnähten zunächst aufgerichtet und dann quer zu den ersten Teilnähten erneut flach zusammengepresst und in zwei weiteren Teilnähten verschweißt werden, wobei die ersten Teilnähte und die weiteren Teilnähte die Naht bilden. Das Schweißen in zwei Schritten vermeidet die Schwächung an den "Katzenaugen". Die Dichtigkeit wird so insbesondere bei größeren Wandstärken der Schlauchenden weiter gesteigert.

Vorzugsweise überdecken in einem solchen Verfahren die ersten Teilnähte und die weiteren Teilnähte unterschiedliche Anteile des Umfangs. Zugleich mit dem Verschweißen kann eine Beschriftung oder anderweitige Markierung auf das zweite Schlauchende aufgebracht werden. Die Größe der Markierung ist auf die Größe der Spannbacken - also auf die Größe der jeweiligen Teilnaht - beschränkt. Die asymmetrische Verschweißung in zwei Schritten mit unterschiedlich langen Teilnähten ermöglicht (zugleich mit der längeren Teilnaht) eine größere Markierung auf dem Schlauchende.

Vorzugsweise überlappen die ersten Teilnähte und die zweiten Teilnähte. So werden Lücken zwischen den ersten und zweiten Teilnähten vermieden. Weiter vorzugsweise überdecken die ersten und zweiten Teilnähte in Summe bis zu 120 % des Umfangs.

Vorzugsweise überdecken die längeren Spannbacken und damit die längeren Teilnähte mindestens 60 % des Umfangs. Weiter vorzugsweise überdecken die längeren Spannbacken nicht mehr als 80 % des Umfangs, um eine übermäßige mechanische Belastung und mögliche Beschädigung des Extrudats in den "Katzenaugen" zu vermeiden.

Die Schutzschicht kann in einem erfindungsgemäßen Verfahren auf eine Hälfte des Umfangs beschränkt werden. Um ein Verschweißen der Innenseite zu vermeiden, muss dann aber die Position der Schutzschicht über dem Umfang beim Einlegen zwischen die Spannbacken berücksichtigt werden.

Vorzugsweise besteht in einem erfindungsgemäßen Verfahren das erste Schlauchende und/oder das zweite Schlauchende aus thermoplastischem Polyurethan. Thermoplastisches Polyurethan (TPU) eignet sich besonders zur Extrusion. Das erfindungsgemäße Verfahren kann insbesondere auch genutzt werden, um einen TPU-Schlauch gratlos mit einem Schlauch aus einem anderen Thermoplasten (z.B. PVC) zu verschweißen.

Vorzugsweise werden in einem erfindungsgemäßen Verfahren die Schlauchenden thermisch verschweißt. Thermische Schweißverfahren, also Verfahren, in denen die zu verschweißenden Oberflächen soweit erhitzt werden, dass sie ineinander fließen und eine stoffliche Einheit bilden, werden insbesondere mittels Hochfrequenz, mittels Laser oder mittels Elektronenstrahl ausgeführt. Alternativ können die Schlauchenden auch chemisch verschweißt werden, insbesondere durch vorübergehendes Anlösen der zu verschweißenden Oberflächen.

Vorzugsweise sind in einem erfindungsgemäßen Verfahren die Spannbacken transparent. Transparente Spannbacken sind für eine Laser- oder Elektronenstrahl durchlässig.

Vorzugsweise wird in einem erfindungsgemäßen Verfahren die Schutzschicht mit einer Rolle auf die Innenseite aufgebracht. Alternativ kann die Schutzschicht anderweitig auf die Innenseite aufgebracht, beispielsweise aufgesprüht oder -gespritzt werden. Weiter alternativ kann die Schutzschicht locker auf die Innenseite aufgelegt werden.

Vorzugsweise härtet in einem erfindungsgemäßen Verfahren die Schutzschicht vor dem Verschweißen aus. Alternativ kann die Schutzschicht aus einem bereit beim Applizieren harten Material bestehen.

Vorzugsweise besteht in einem erfindungsgemäßen Verfahren die Schutzschicht aus einem nach dem Aushärten bis mindestens 250 °C hitzebeständigen Lack.

Hitzebeständige Lacke sind auf der Basis von Polyester, PVC-Mischpolymerisaten, Polyvinylacetat, Polyvinylbutyral, Nitrocellulose, Acetylcellulose oder Celluloseacetat allgemein bekannt. Alternativ kann die Schutzschicht aus einer hitzebeständigen Folie, beispielsweise einer Metallfolie, insbesondere aus Aluminium bestehen, die vor dem Verschweißen auf die Innenseite aufgelegt wird.

Vorgeschlagen wird erfindungsgemäß weiterhin ein Verfahren zum Herstellen eines Innenschlauchs für ein Fahrzeugrad, wobei aus einem endlos-schlauchförmigen Extrudat ein Rohling geschnitten und torusförmig geschlossen wird und zwei Schlauchenden des Rohlings wie vorstehend beschrieben zu dem Innenschlauch verschweißt werden. Diese Art der Herstellung von Innenschläuchen ist aus dem Stand der Technik bekannt und bewährt.

### Ausführungsbeispiel

Die Erfindung wird nachfolgend anhand eines Ausführungsbeispiels erläutert. Es zeigen
- Fig. 1: einen Schnitt durch einen Innenschlauch und
- Fig. 2: ein Detail aus dem erfindungsgemäßen Verfahren.

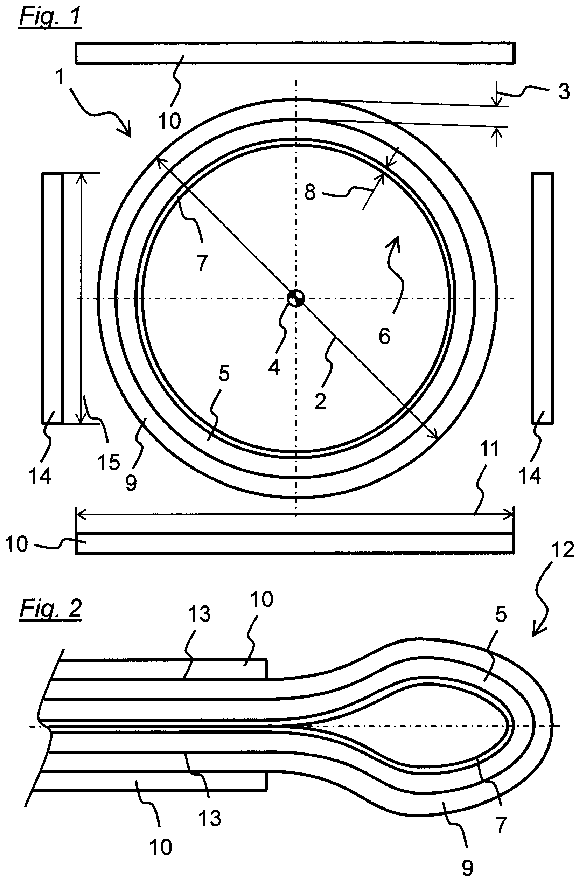

In einem erfindungsgemäßen Verfahren wird ein Innenschlauch 1 für ein nicht dargestelltes 29"-Fahrzeugrad eines Fahrrads gefertigt. Der Innenschlauch 1 ist in Figur 1 nicht maßstäblich in einem Schnitt durch die Nahtstelle dargestellt Der Innenschlauch 1 hat einen Außendurchmesser 2 von 30 *mm.* Die Wandstärke 3 des Innenschlauchs 1 beträgt 350 *µm*. Der Innenschlauch 1 wird durch Blasfolienextrusion endlos aus thermoplastischem Polyurethan (TPU) auf Polyesterbasis gefertigt.

Das Extrudat wird in nicht dargestellte Rohlinge von jeweils 2030 mm genau orthogonal zur Schlauchlängsachse 4 abgelängt.

Ein erstes Schlauchende 5 des Rohlings wird geöffnet, so dass die Innenseite 6 sichtbar wird und gut zugänglich ist. Auf die Innenseite 6 wird nun ringsum bis in eine Tiefe von 20 *mm* in Richtung der Schlauchlängsachse 4 mit einer kleinen Filzrolle eine Schutzschicht 7 aus einem hitzebeständigen Klarlack (z.B. mit dem Handelsnamen *Motip 04033*) mit einer Dicke von ca. 5 *µm* aufgetragen.

Die Schutzschicht 7 benetzt den gesamten Umfang der Innenseite 6. So werden lokal begrenzte Verschweißungen vermieden, die die Qualität der Schweißnaht mindern oder sogar dazu führen können, dass die beiden innenliegenden Folien nicht mehr voneinander zu trennen sind.

Nach einer Trockenzeit von ca. 30 *Minuten*, in der die Schutzschicht 7 aushärtet, wird das erste Schlauchende 5 längs derart in das zweite Schlauchende 9 gesteckt, dass beide um etwa 10 *mm* überlappen. Die Schutzschicht 7 ist bis 800 °*C* hitzebeständig.

Das erste Schlauchende 5 und das zweite Schlauchende 9 werden flach zusammengepresst und wie in Figur 2 dargestellt zunächst zwischen zwei ersten Spannbacken 10 mit einer Länge 11 von ca. 33 *mm* (etwa 70 % der Schlauchbreite) mittels Hochfrequenz verschweißt. Zugleich prägen und drucken die ersten Spannbacken 10 das Logo des Herstellers und technische Daten sowie Prüfsiegel des Innenschlauchs 1 auf die Nahtstelle.

Dann wird der Innenschlauch 1 im Bereich der Katzenaugen 12 aufgerichtet, quer zu den ersten Teilnähten 13 erneut flach zusammengepresst und zwischen zwei zweiten Spannbacken 14 mit einer Länge 15 von ca. 19 *mm* (etwa 40 % der Schlauchbreite) erneut verschweißt. Die Elektroden bestehen aus Messing und weisen in Richtung der Schlauchlängsachse 4 eine nicht dargestellte Breite von 5 *mm* auf. Die Spannbacken 10, 14 und damit die ersten Teilnähte 13 und die zweiten Teilnähte überdecken in Summe 110 % des Umfangs.

In den Figuren sind
- 1: Innenschlauch
- 2: Außendurchmesser
- 3: Wandstärke
- 4: Schlauchlängsachse
- 5: erstes Schlauchende
- 6: Innenseite
- 7: Schutzschicht
- 8: Dicke
- 9: zweites Schlauchende
- 10: erste Spannbacke
- 11: Länge
- 12: Katzenauge
- 13: erste Teilnaht
- 14: zweite Spannbacke
- 15: Länge

## Patentansprüche

1. Verfahren zum Verschweißen eines ersten Schlauchendes (5) an einer Nahtstelle mit einem zweiten Schlauchende (9) in einer Naht, die auf einem Umfang des ersten Schlauchendes (5) umläuft, wobei zunächst an der Nahtstelle in dem ersten Schlauchende (5) eine Schutzschicht (7) appliziert, dann das zweite Schlauchende (9) über die Nahtstelle hinaus über das erste Schlauchende (5) geschoben wird und schließlich die Schlauchenden (5, 9) an der Nahtstelle zwischen zwei aufeinander zu geführten Spannbacken (10, 14) flach zusammengepresst und in dieser Stellung verschweißt werden, wobei die Schutzschicht (7) auf einer Innenseite (6) des ersten Schlauchendes (5) appliziert wird und ein Verschweißen der Innenseite (6) des ersten Schlauchendes (5) verhindert, ***dadurch gekennzeichnet, dass*** die Schlauchenden (5, 9) nach dem Verschweißen in zwei ersten Teilnähten (13) zunächst aufgerichtet und dann quer zu den ersten Teilnähten (13) erneut flach zusammengepresst und in zwei weiteren Teilnähten verschweißt werden, wobei die ersten Teilnähte (13) und die weiteren Teilnähte die Naht bilden.

2. Verfahren nach dem vorgenannten Anspruch, ***dadurch gekennzeichnet, dass*** die ersten Teilnähte (13) und die weiteren Teilnähte unterschiedliche Anteile des Umfangs überdecken.

3. Verfahren nach einem der vorgenannten Ansprüche, ***dadurch gekennzeichnet, dass*** das erste Schlauchende (5) und/oder das zweite Schlauchende (9) aus thermoplastischem Polyurethan besteht.

4. Verfahren nach einem der vorgenannten Ansprüche, ***dadurch gekennzeichnet, dass*** die Schlauchenden (5, 9) thermisch verschweißt werden.

5. Verfahren nach einem der vorgenannten Ansprüche, ***dadurch gekennzeichnet, dass*** die Spannbacken transparent sind.

6. Verfahren nach einem der vorgenannten Ansprüche, ***dadurch gekennzeichnet, dass*** die Schutzschicht (7) mit einer Rolle auf die Innenseite (6) aufgebracht wird.

7. Verfahren nach einem der vorgenannten Ansprüche, ***dadurch gekennzeichnet, dass*** die Schutzschicht (7) vor dem Verschweißen aushärtet.

8. Verfahren nach dem vorgenannten Anspruch, ***dadurch gekennzeichnet, dass*** die Schutzschicht (7) aus einem nach dem Aushärten bis mindestens 250 °*C* hitzebeständigen Lack besteht.

9. Verfahren zum Herstellen eines Innenschlauchs (1) für ein Fahrzeugrad, ***dadurch gekennzeichnet, dass*** aus einem endlos-schlauchförmigen Extrudat ein Rohling geschnitten und torusförmig geschlossen wird und zwei Schlauchenden (5, 9) des Rohlings nach einem der vorgenannten Ansprüche zu dem Innenschlauch (1) verschweißt werden.

## Claims

1. Method for welding a first tube end (5) at a joint with a second tube end (9) in a welding seam that extends around a circumference of the first tube end (5), wherein a protective layer (7) first is applied at the joint on the first tube end (5), then the second tube end (9) is slipped over the first tube end (5) beyond the joint, and finally the tube ends (5, 9) are pressed together flat at the joint between two clamping jaws (10, 14) which are brought together, and welded in this position, wherein the protective layer (7) is applied on an interior side (6) of the first tube end (5) and prevents a welding of the interior side (6) of the first tube end (5), **characterized in that** the tube ends (5, 9) are first straightened after being welded in two first partial welding seams (13) and then are pressed together flat again transversely to the first partial welding seams (13) and welded in two further partial welding seams, wherein the first partial welding seams (13) and the further partial welding seams form the welding seam.

2. Method according to the aforementioned claim, **characterized in that** the first partial welding seams (13) and the further partial welding seams cover different portions of the circumference.

3. Method according to any one of the aforementioned claims, **characterized in that** the first tube end (5) and/or the second tube end (9) are/is made of thermoplastic polyurethane.

4. Method according to any one of the aforementioned claims, **characterized in that** the tube ends (5, 9) are thermally welded.

5. Method according to any one of the aforementioned claims, **characterized in that** the clamping jaws are transparent.

6. Method according to any one of the aforementioned claims, **characterized in that** the protective layer (7) is applied on the interior side (6) with a roller.

7. Method according to any one of the aforementioned claims, **characterized in that** the protective layer (7) is cured before the thermal welding process.

8. Method according to the aforementioned claim, **characterized in that** the protective layer (7), after curing, consists of a coating that is heat-resistant up to at least 250 °C.

9. Method for making an inner tube (1) for a vehicle wheel, **characterized in that** a blank is cut from an endless tube-shaped extrudate and closed in a toroidal shape, and two tube ends (5, 9) of the blank are welded together in a manner according to any one of the aforementioned claims to form the inner tube (1).

## Revendications

1. Procédé de soudage d'une première extrémité de flexible (5) à un point de jonction de soudure avec une deuxième extrémité de flexible (9) en un joint de soudure, qui court sur une périphérie de la première extrémité de flexible (5), sachant qu'une couche de protection (7) est appliquée d'abord au point de jonction de soudure dans la première extrémité de flexible (5), que la deuxième extrémité de flexible (9) est ensuite déplacée au-delà du point de soudure sur la première extrémité de flexible (5) et les extrémités de flexible (5, 9) sont finalement comprimées ensemble à plat au point de jonction de soudure entre deux mâchoires de serrage (10, 14) guidées l'une sur l'autre et sont soudées dans cette position, sachant que la couche de protection (7) est appliquée sur une face intérieure (6) de la première extrémité de flexible (5) et évite un soudage de la face intérieure (6) de la première extrémité de flexible (5), **caractérisé en ce que** les extrémités de flexible (5, 9) sont d'abord relevées après le soudage en deux premières parties de joint de soudure (13) et sont ensuite à nouveau comprimées ensemble à plat transversalement aux premières parties de joint de soudure (13) et sont soudées en deux autres parties de joint de soudure, sachant que les premières parties de joint de soudure (13) et les autres parties de joint de soudure forment le joint de soudure.

2. Procédé selon la revendication précédente, **caractérisé en ce que** les premiers joints de soudure partiels (13) et les autres joints de soudure recouvrent des parties différentes de la périphérie.

3. Procédé selon l'une quelconque des revendications précédentes, **caractérisé en ce que** la première extrémité de flexible (5) et/ou la deuxième extrémité de flexible (9) est composée de polyuréthane thermoplastique.

4. Procédé selon l'une quelconque des revendications précédentes, **caractérisé en ce que** les extrémités de flexible (5, 9) sont soudées thermiquement.

5. Procédé selon l'une quelconque des revendications précédentes, **caractérisé en ce que** les mâchoires de serrage sont transparentes.

6. Procédé selon l'une quelconque des revendications précédentes, **caractérisé en ce que** la couche de protection (7) est appliquée avec un rouleau sur la face intérieure (6).

7. Procédé selon l'une quelconque des revendications précédentes, **caractérisé en ce que** la couche de protection (7) est durcie avant le soudage.

8. Procédé selon l'une quelconque des revendications précédentes, **caractérisé en ce que** la couche de protection (7) est composée d'un vernis thermorésistant après le durcissement jusqu'à au moins 250 °C.

9. Procédé de fabrication d'un flexible intérieur (1) pour une roue de véhicule, **caractérisé en ce qu'**une ébauche est découpée et fermée en forme toroïdale à partir d'une pièce extrudée sans fin en forme de flexible et les deux extrémités de flexible (5, 9) de l'ébauche sont soudées au flexible intérieur (1) selon l'une quelconque des revendications précédentes.
